# EUROPÄISCHE PATENTSCHRIFT

(11) **EP 4 192 708 B1**
(45) Veröffentlichungstag und Bekanntmachung des Hinweises auf die Patenterteilung: **11.06.2025**
(21) Anmeldenummer: 21755740.4
(22) Anmeldetag: 04.08.2021
(51) Int. Cl.: B60N 2/02, B60N 2/90

(54) **SITZTIEFENVERSTELLVORRICHTUNG**
SEAT DEPTH ADJUSTMENT DEVICE
DISPOSITIF DE RÉGLAGE DE PROFONDEUR D'ASSISE DE SIÈGE

(30) Priorität: 06.08.2020 DE 102020209986
(43) Veröffentlichungstag der Anmeldung: 14.06.2023
(73) Patentinhaber: Brose Fahrzeugteile SE & Co. Kommanditgesellschaft, Coburg, 96450 Coburg (DE)
(72) Erfinder: NOVAK, Vojtech, 74258 Pribor (CZ); GRYGARIK, Jan, 75642 Choryne (CZ); VENCLÌK, Milan, 74221 Koprivnice (CZ); HOLUB, Petr, 74258 Príbor (CZ); GANGELBERGER, Vít, 74769 Opava (CZ)
(74) Vertreter: Maikowski & Ninnemann Patentanwälte Partnerschaft mbB
(86) Internationale Anmeldenummer: PCT/EP2021/071784
(87) Internationale Veröffentlichungsnummer: WO 2022/029183

(56) Entgegenhaltungen:
- DE-A1- 102011 054 927
- DE-T5- 112018 004 791
- DE-U1- 29 623 565

## Beschreibung

Die Erfindung betrifft eine Verstellvorrichtung für einen Fahrzeugsitz nach dem Oberbegriff des Anspruchs 1 sowie einen Fahrzeugsitz und ein Verfahren zur Herstellung einer Verstellvorrichtung.

Eine solche Verstellvorrichtung umfasst eine Basis, ein verschiebbar an der Basis gelagertes Verstellteil, und ein am Verstellteil gelagertes Betätigungselement, das zum Verschieben des Verstellteils relativ zur Basis betätigbar ist.

Die DE 101 23 799 C1 beschreibt eine derartige Verstellvorrichtung. Dabei wird ein Betätigungselement in Form eines Handgriffs mittels mehrerer Federn in einer Verriegelungsstellung gehalten. Der bekannte Aufbau weist allerdings eine große Anzahl an Einzelteilen auf, deren Zusammenbau aufwändig ist.

Die DE 11 2018 004 791 T5 bezieht sich auf eine Sitzkissenerweiterungsvorrichtung, womit die Längeneinstellung eines in einem Fahrzeug eingebauten Sitzkissens nach vorne und nach hinten ausgeführt wird. Ein Manipulationsteil umfasst dabei einen Stab, einen Hebel und Federn, wobei die Federn die elastische Kraft bereitstellen, um den Stab nach vorne zu bewegen.

Aufgabe der vorliegenden Erfindung ist es, eine verbesserte Verstellvorrichtung anzugeben.

Diese Aufgabe wird durch die Gegenstände der unabhängigen Ansprüche gelöst.

Indem eine Feder vorgesehen ist, welche sich einerseits an der Basis und andererseits am Betätigungselement abstützt, wird ermöglicht, dass eine einzige Feder gleich zwei Funktionen erfüllt, und zwar sowohl das Betätigungselement in eine bestimmte Stellung spannt, als auch, durch die Abstützung an der Basis, eine Spannung zwischen der Basis und (über das Betätigungselement) dem Verstellteil aufbaut. Letztere kann z.B. zum Bewirken oder zur Unterstützung einer Verschiebung des Verstellteils relativ zur Basis genutzt werden.

Insbesondere kann die Verstellvorrichtung als Sitztiefenverstellvorrichtung ausgebildet sein. Das Verstellteil ist z.B. dazu eingerichtet, zumindest einen Teil einer Sitzfläche des Fahrzeugsitzes auszubilden und/oder zumindest ein Teil eines Sitzpolsters zu tragen. Je nach der Stellung des Verstellteils relativ zur Basis wird eine größere oder kleinere Sitztiefe bereitgestellt. Eine derartige Sitztiefenverstellvorrichtung kann dementsprechend mit einem besonders einfachen Aufbau hergestellt werden.

Die Feder spannt das Betätigungselement beispielsweise in eine (z.B. mittels eines an die Bewegung des Betätigungselements gekoppelten Verriegelungselements) das Verstellteil mit der Basis verriegelnde Verriegelungsstellung vor. So kann sichergestellt werden, dass das Verstellteil stets mit der Basis verriegelt wird, wenn das Betätigungselement nicht betätigt wird. Das Betätigungselement ist z.B. manuell betätigbar.

Die Feder spannt das Verstellteil in eine relativ zur Basis ausgefahrene Stellung (für eine große Sitztiefe) vor. So kann die Einstellung einer ausgefahrenen Stellung komfortabel durch die entsprechende Federkraft unterstützt oder ganz bewirkt werden. Dabei wird keine zusätzliche Feder benötigt.

Optional ist die Feder als Spiralfeder mit einer Spiralachse ausgebildet. Dabei kann vorgesehen sein, dass die Spiralachse in Bezug auf die Basis und/oder in Bezug auf das Verstellteil (zumindest abschnittsweise) einen anderen Winkel beschreibt, wenn das Betätigungselement in einer das Verstellteil mit der Basis verriegelnden Verriegelungsstellung angeordnet ist, als wenn das Betätigungselement in einer eine Verstellung des Verstellteils relativ zur Basis freigebenden Freigabestellung angeordnet ist. Auf diese Weise kann die beschriebene Doppelfunktion der Feder mit einer besonders einfachen Konstruktion erreicht werden.

Das Betätigungselement kann um eine Schwenkachse verschwenkbar am Verstellteil gelagert sein, was eine intuitive Bedienung ermöglicht.

In einer Weiterbildung stützt sich die Feder an einer zur Schwenkachse exzentrischen Abstützstelle des Betätigungselements ab. Dadurch kann eine Vorspannung der Feder in besonders einfacher Weise dafür verwendet werden, das Betätigungselement in eine bestimmte Stellung, insbesondere die Verriegelungsstellung, vorzuspannen.

Die Verstellvorrichtung kann ferner ein Verriegelungselement umfassen, das z.B. um eine Drehachse drehbar an der Basis oder dem Verstellteil gelagert ist. Das Verriegelungselement ist beispielsweise lösbar mit einer Verriegelungskontur der Basis, z.B. in Form einer Reihe von Zähnen, derart in Eingriff bringbar, dass die Basis mit dem Verstellteil verriegelt wird.

In einer Ausgestaltung sind die Schwenkachse und die Drehachse nicht parallel zueinander, sondern stehen in einem Winkel zueinander, und zwar insbesondere im rechten Winkel. Dabei kann vorgesehen sein, dass eine Rotation des Betätigungselements um die Schwenkachse eine Rotation des Verriegelungselements um die Drehachse bewirkt.

Das Betätigungselement steht mit dem Verriegelungselement in Wirkverbindung, insbesondere auch in Berührung. Zum Beispiel kann das Betätigungselement mit dem Verriegelungselement über aneinander entlang gleitende Gleitflächen wirkverbunden sein.

Zumindest eine der aneinander entlang gleitenden Gleitflächen beschreibt optional die Form eines Abschnitts einer Helix. Hierdurch kann eine besonders leichtgängige Funktion erzielt werden. Es ist anzumerken, dass eine derartige Ausgestaltung in Kombination mit der sich an der Basis und am Betätigungselement abstützenden Feder einen besonders einfachen Aufbau gestattet, da das Betätigungselement in Berührung sowohl mit dem Verriegelungselement als auch mit der Feder stehen kann, was eine besonders wirkungsvolle Kraftübertragung mit wenigen Bauteilen ermöglicht. Andererseits kann die vorstehend beschriebene Ausgestaltung des Betätigungselements und des Verriegelungselements auch unabhängig von der Feder oder mit einer anders angeordneten Feder eingesetzt werden. So wird gemäß einem Aspekt eine Verstellvorrichtung bereitgestellt, umfassend eine Basis, ein verschiebbar an der Basis gelagertes Verstellteil, ein Betätigungselement, das zum Verschieben des Verstellteils relativ zur Basis betätigbar ist, und ein Verriegelungselement, das lösbar mit einer Verriegelungskontur in Eingriff bringbar ist, um die Basis mit dem Verstellteil gegen eine Verschiebung relativ zueinander zu verriegeln, wobei das Betätigungselement mit dem Verriegelungselement über aneinander entlang gleitende Gleitflächen wirkverbunden ist, von denen zumindest eine z.B. die Form eines Abschnitts einer Helix beschreibt.

Optional ist eine Führungseinrichtung zur Führung des Verstellteils an der Basis vorgesehen. Die Führungseinrichtung umfasst verschiebbar ineinandergreifende Führungselemente, z.B. zwei Paare von verschiebbar ineinandergreifenden Führungselementen. Die Führungselemente bilden optional einander entsprechende, parallel zueinander ausgerichtete und somit eine Führungsebene beschreibende Führungsachsen aus, wobei zumindest eines der Führungselemente einen schräg zur Führungsebene verlaufenden Flächenabschnitt aufweist. Hierdurch können Fertigungstoleranzen ausgeglichen werden.

An zumindest einem der Führungselemente ist optional ein streifenförmiger Vorsprung ausgebildet. Dieser ist z.B. so schmal, dass er durch ein darauf einwirkendes Teil (elastisch und/oder plastisch) verformt werden kann. Hierdurch können weitere Toleranzen ausgeglichen werden.

Auch an dieser Stelle ist darauf hinzuweisen, dass eine solche Ausgestaltung der Führungseinrichtung in Kombination mit der sich an der Basis und am Betätigungselement abstützenden Feder einen besonders einfachen und zugleich spielfreien Aufbau gestattet. Denn durch den Ausgleich der Fertigungstoleranzen durch die Führungseinrichtung kann ein Spiel und damit Klappern in den beiden Raumrichtungen senkrecht zueinander und zur Verschiebeachse des Verstellteils relativ zur Basis reduziert oder ganz vermieden werden. Und weil die Feder stets eine Vorspannung zwischen dem Verschiebeteil und der Basis aufrechterhalten kann, wird auch in der dritten Raumrichtung entlang der Verschiebeachse ein Spiel und Klappern vermieden, sodass eine insgesamt klapperfreie Konstruktion bei gleichzeitig besonders einfachem Aufbau ermöglicht wird. Andererseits kann die vorstehend beschriebene Führungseinrichtung auch unabhängig von der Feder oder mit einer anders angeordneten Feder eingesetzt werden. So wird gemäß einem Aspekt eine Verstellvorrichtung bereitgestellt, umfassend eine Basis, ein verschiebbar an der Basis gelagertes Verstellteil, ein Betätigungselement, das zum Verschieben des Verstellteils relativ zur Basis betätigbar ist, und eine Führungseinrichtung zur Führung des Verstellteils an der Basis, umfassend zwei Paare von verschiebbar ineinandergreifenden Führungselementen, die parallel zueinander ausgerichtet sind und eine Führungsebene aufspannen, wobei zumindest eines der Führungselemente einen schräg zur Führungsebene verlaufenden Abschnitt und/oder einen streifenförmigen Vorsprung aufweist.

Ferner kann die Führungseinrichtung einen Haltebolzen umfassen, der dazu eingerichtet ist, am streifenförmigen Vorsprung entlang zu gleiten. Das ermöglicht eine besonders präzise und langlebige Ausgestaltung.

In einer Ausgestaltung ist ein verschiebbar an der Basis oder dem Verstellteil gelagertes Verriegelungselement, das lösbar mit einer Verriegelungskontur in Eingriff bringbar ist, vorgesehen, um die Basis mit dem Verstellteil zu verriegeln. Die Verschieberichtung des Verriegelungselements am Verstellteil ist zum Beispiel senkrecht relativ zur Verstellrichtung des Verstellteils relativ zur Basis ausgerichtet.

In einer Weiterbildung ist das Betätigungselement mit dem Verriegelungselement über ein biegbares Band, insbesondere Kunststoffband, wirkverbunden. Das ermöglicht eine besonders kostengünstige und zugleich robuste und langlebige Ausgestaltung. Auch diesbezüglich ist anzumerken, dass eine derartige Ausgestaltung in Kombination mit der sich an der Basis und am Betätigungselement abstützenden Feder einen besonders einfachen Aufbau gestattet, da auf diese Weise alle Kräfte zum Verriegeln, Entriegeln und Verschieben unmittelbar über das Betätigungselement übertragen werden können, was eine besonders wirkungsvolle Kraftübertragung mit wenigen Bauteilen ermöglicht. Andererseits kann die vorstehend beschriebene Kopplung des Betätigungselements mit dem verschiebbaren Verriegelungselement auch unabhängig von der Feder oder mit einer anders angeordneten Feder eingesetzt werden. So wird gemäß einem Aspekt eine Verstellvorrichtung bereitgestellt, umfassend eine Basis, ein verschiebbar an der Basis gelagertes Verstellteil, ein Betätigungselement, das zum Verschieben des Verstellteils relativ zur Basis betätigbar ist, und ein Verriegelungselement, das lösbar mit einer Verriegelungskontur in Eingriff bringbar ist, um die Basis mit dem Verstellteil gegen eine Verschiebung relativ zueinander zu verriegeln, wobei das Betätigungselement mit dem Verriegelungselement über ein Band, insbesondere ein Kunststoffband, wirkverbunden ist.

Das (Kunststoff-) Band ist optional gleitend an einer Umlenkkontur geführt und liegt an der Umlenkkontur an. Das Band weist eine Flexibilität auf, die es erlaubt, dass sich das Band an die Umlenkkontur anlegt und in dieser Biegelage entlang seiner Länge verschiebbar ist.

Die Basis bildet optional eine Aufnahme, z.B. im Form eines Bettes, für die Feder aus, in der die Feder angeordnet ist. Das Bett kann über die gesamte Länge der längserstreckten Feder in einer Richtung senkrecht zur Längsachse (z.B. die Spiralachse) der Feder geöffnet sein. Alternativ oder zusätzlich kann das Verstellteil eine Aufnahme, insbesondere ein Bett für die Feder ausbilden, in der die Feder angeordnet ist. Auch dieses Bett kann über die gesamte Länge der Feder in einer Richtung senkrecht zur Längsachse (z.B. der Spiralachse) der Feder geöffnet sein. Somit kann die Feder bei der Montage in einfacher Weise in das Bett der Basis und das Bett des Verstellteils eingelegt und/oder eingeclipst werden, was einen besonders einfachen und schnellen Zusammenbau ermöglicht. Das Bett der Basis und das Bett des Verstellteils können zusammen eine Aufnahmekammer für die Feder ausbilden.

Die Basis und/oder das Verstellteil kann/können jeweils einen Halteabschnitt aufweisen, an oder in welchem die Feder z.B. formschlüssig gehalten ist und der (jeweils) in einer Richtung senkrecht zur Längsachse der längserstreckten Feder geöffnet ist. die Basis und/oder das Verstellteil können derart ausgebildet sein, dass die Feder bei der Montage in einer Richtung in einem (z.B. senkrechten oder schrägen) Winkel zu ihrer Längsachse in den Halteabschnitt eingerastet werden kann. Der Halteabschnitt der Basis und/oder der Halteabschnitt des Verstellteils kann/können die Feder beispielsweise in Umfangsrichtung um ihre Längsachse über einen Winkel von mehr als 180 Grad umgreifen (aber insbesondere um weniger als 360 Grad). Insbesondere kann vorgesehen sein, dass die Feder nicht ausschließlich axial in die Aufnahme (das Bett) der Basis und/oder des Verstellteils einlegbar ist.

Optional sind der Halteabschnitt der Basis und der Halteabschnitt des Verstellteils in entgegengesetzte Richtungen geöffnet. Die Basis und das Verstellteil können die Feder so dazwischen sicher halten.

In einer Ausgestaltung sind der Halteabschnitt der Basis und der Halteabschnitt des Verstellteils entlang der Längsachse der Feder hintereinander angeordnet. So ist es möglich, dass beide Halteabschnitte die Feder jeweils formschlüssig umgreifen. Ferner wird hierdurch eine besonders genau vorgegebene und sichere Lagerung der Feder ermöglicht.

Der Halteabschnitt der Basis und/oder der Halteabschnitt des Verstellteils kann/können jeweils zwei zueinander parallele und/oder voneinander beabstandete Balken aufweisen. Die Balken sind jeweils z.B. entlang der Längsrichtung der Feder längserstreckt. So kann eine sichere Halterung, insbesondere Verrastung, sichergestellt werden.

Die Feder weist optional zwei funktional verschiedene Abschnitte (insbesondere Spiralabschnitte) auf, beispielsweise mit unterschiedlichen Steigungen. Hierdurch kann die Feder eine Doppelfunktion erfüllen.

Die Feder kann einen ersten Abschnitt und einen zweiten Abschnitt aufweisen. Der erste Abschnitt und der zweite Abschnitt sind können verschieden voneinander ausgebildet sein. Zwischen dem ersten und dem zweiten Abschnitt ist optional eine Taillierung ausgebildet. Die Tallierung ist z.B. an einer Halteeinrichtung, wie beispielsweise einer Engstelle des Verstellteils (z.B. axial) arretiert, und zwar insbesondere in Richtung einer vom ersten zum zweiten Abschnitt weisenden Achse.

Der erste Abschnitt der Feder kann derart vorgespannt sein, dass er einen Druck auf die Halteeinrichtung, insbesondere die Engstelle, ausübt. Der zweite Abschnitt kann derart vorgespannt sein, dass er (insbesondere gleichzeitig) einen Zug auf die Halteeinrichtung, insbesondere die Engstelle, ausübt. So kann eine einzige Feder z.B. sowohl ein Ausfahren des Verstellteils als auch eine Rückstellung des Betätigungselements bewirken.

Gemäß einem Aspekt wird ein Fahrzeugsitz bereitgestellt, der eine Verstellvorrichtung nach einer beliebigen hierin beschriebenen Ausgestaltung umfasst. Bezüglich der Vorteile dieser Lösung wird auf die vorstehende Beschreibung der Verstellvorrichtung Bezug genommen.

Gemäß einem Aspekt wird ein Verfahren zur Herstellung einer Verstellvorrichtung für einen Fahrzeugsitz angegeben, insbesondere der Verstelleinrichtung nach einer beliebigen, hierin beschriebenen Ausgestaltung. Das Verfahren umfasst das Montieren einer entlang einer Längsachse längserstreckten Feder an einem Halteabschnitt einer Basis und/oder an einem Halteabschnitt eines Verstellteils, indem die Feder in einer Richtung in einem (z.B. senkrechten) Winkel (oder schräg) zu ihrer Längsachse in den jeweiligen Halteabschnitt eingerastet wird. Ferner umfasst das Verfahren das Montieren des Verstellteils verschiebbar gelagert an der Basis derart, dass ein Betätigungselement, das zum Verschieben des Verstellteils relativ zur Basis betätigbar ist, am Verstellteil gelagert ist. So ist eine besonders einfache und schnelle Montage möglich.

Der der Erfindung zugrundeliegende Gedanke soll nachfolgend anhand der in den Figuren dargestellten Ausführungsbeispiele näher erläutert werden. Es zeigen in schematischen Darstellungen:
- Fig. 1: eine Sitztiefenverstellvorrichtung mit einer Basis, einem verschiebbar an der Basis gelagerten Verstellteil, einem Betätigungselement und einer Feder;
- Fig. 2A und 2B: Querschnittsansichten der Sitztiefenverstellvorrichtung gemäß Fig. 1 in einem verriegelten Zustand (Fig. 2A) und einem entriegelten Zustand (Fig. 2B);
- Fig. 3A und 3B: die Sitztiefenverstellvorrichtung gemäß Fig. 1, wobei das Verstellteil in einem eingefahrenen Zustand (Fig. 3A) bzw. einem ausgefahrenen Zustand (Fig. 3B) gezeigt ist;
- Fig. 4A und 4B: das Betätigungselement und ein damit in Wirkverbindung stehendes Verriegelungselement der Sitztiefenverstellvorrichtung gemäß Fig. 1 in einer Verriegelungsstellung (Fig. 4A) bzw. einer Entriegelungsstellung (Fig. 4B);
- Fig. 5: das Betätigungselement der Sitztiefenverstellvorrichtung gemäß Fig. 1 mit Blick auf eine Gleitfläche zur Wirkverbindung mit dem Verriegelungselement;
- Fig. 6: das Verstellteil, das Betätigungselement und das Verriegelungselement der Sitztiefenverstellvorrichtung gemäß Fig. 1;
- Fig. 7: die Basis, das Betätigungselement und das Verriegelungselement der Sitztiefenverstellvorrichtung gemäß Fig. 1;
- Fig. 8 bis 11: Details einer Führungseinrichtung der Sitztiefenverstellvorrichtung gemäß Fig. 1;
- Fig. 12 und 13: in einer perspektivischen Ansicht von oben (Fig. 12) und einer aufgeschnittenen, perspektivischen Ansicht von unten (Fig. 13) eine Sitztiefenverstellvorrichtung mit einer Basis, einem verschiebbar an der Basis gelagerten Verstellteil und einem Betätigungselement, das über ein Kunststoffband mit einem Verriegelungselement gekoppelt ist;
- Fig. 14 bis 16: Ansichten einer Sitztiefenverstellvorrichtung mit einer Basis, einem verschiebbar an der Basis gelagerten Verstellteil, einem Betätigungselement und einer Feder;
- Fig. 17: das Verstellteil gemäß Fig. 14-16 mit dem Betätigungselement, einem Verriegelungselement und der Feder in einer Draufsicht;
- Fig. 18: die Basis gemäß Fig. 14-16 mit dem Betätigungselement, dem Verriegelungselement und der Feder in einer Draufsicht;
- Fig. 19: das Verstellteil und die Feder gemäß Fig. 14-16 in einer perspektivischen Ansicht; und
- Fig. 20: eine Ansicht eines Fahrzeugsitzes mit einem Sitzteil und einer Rückenlehne.

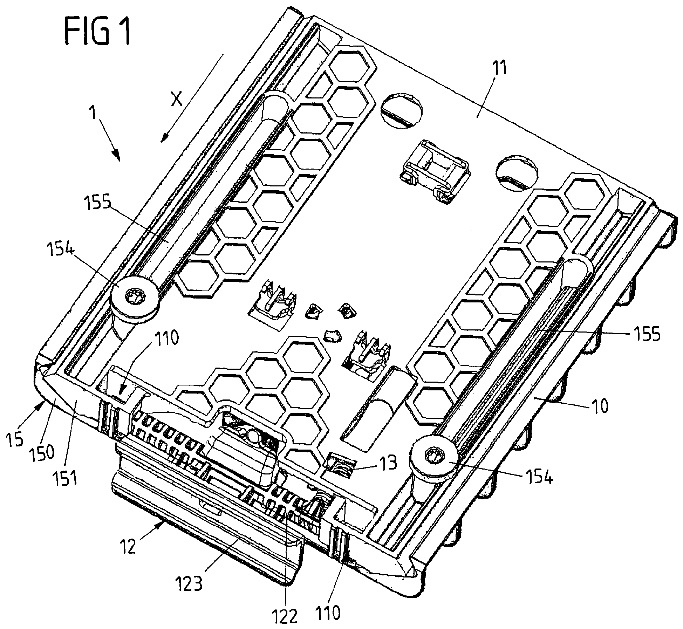

Fig. 1 zeigt eine Verstellvorrichtung in Form einer Sitztiefenverstellvorrichtung 1, welche eine Basis 10 und ein relativ zur Basis 10 entlang einer Längsachse X verschiebbar an der Basis 10 gelagertes Verstellteil 11 umfasst.

Die Basis 10 ist derart an einem Fahrzeugsitz, z.B. an einem Sitzgestell oder einer Sitzwanne des Fahrzeugsitzes, montierbar, dass das Verstellteil 11 zumindest einen Teil einer durch einen Sitzbenutzer einsitzbaren Sitzfläche abstützt oder ausbildet. Beispielsweise wird die Sitzfläche durch ein Polster ausgebildet, welches zumindest teilweise über das Verstellteil 11 abgestützt ist. Die Sitztiefenverstellvorrichtung 1 ist dazu ausgebildet, eine Gewichtskraft eines Sitzbenutzers zumindest teilweise abzustützen.

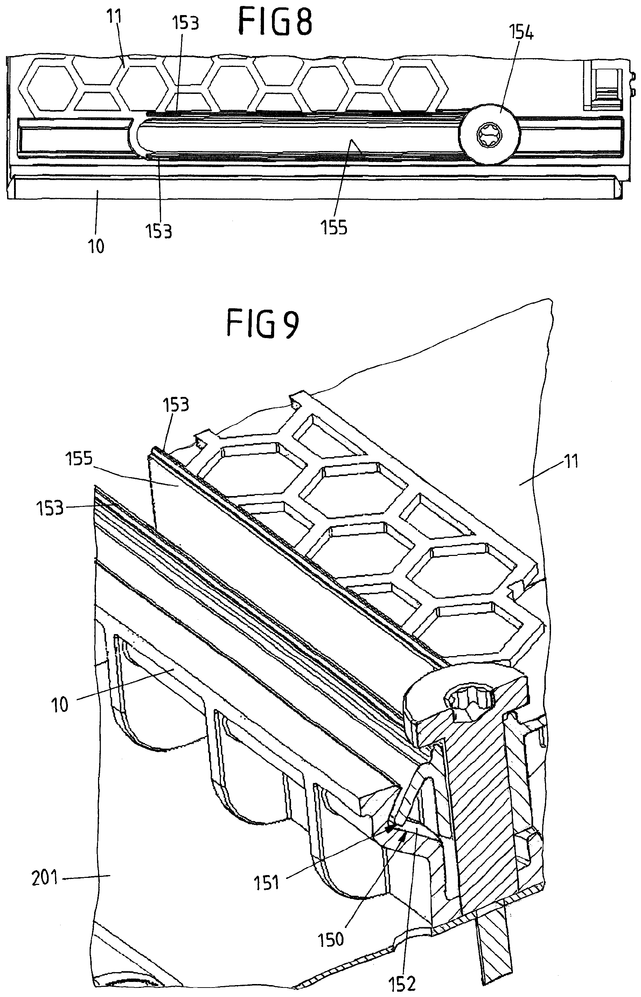

Zur längsverschiebbaren Lagerung des Verstellteils 11 an der Basis 10 umfasst die Sitztiefenverstellvorrichtung 1 eine Führungseinrichtung 15 mit Führungselementen 150, 151, welche vorliegend als an der Basis 10 und am Verstellteil 11 ausgeformte Gleitflächen ausgebildet sind, und mit in Schlitzen 155 geführten Haltebolzen 154. Die Führungseinrichtung 15 wird weiter unten im Zusammenhang mit den Fig. 8 bis 11 noch näher erläutert werden. Die Basis 10 und das Verstellteil 11 sind jeweils einstückig ausgebildet, wobei die Basis 10 und/oder das Verstellteil 11 alternativ auch mehrteilig ausgestaltet sein können.

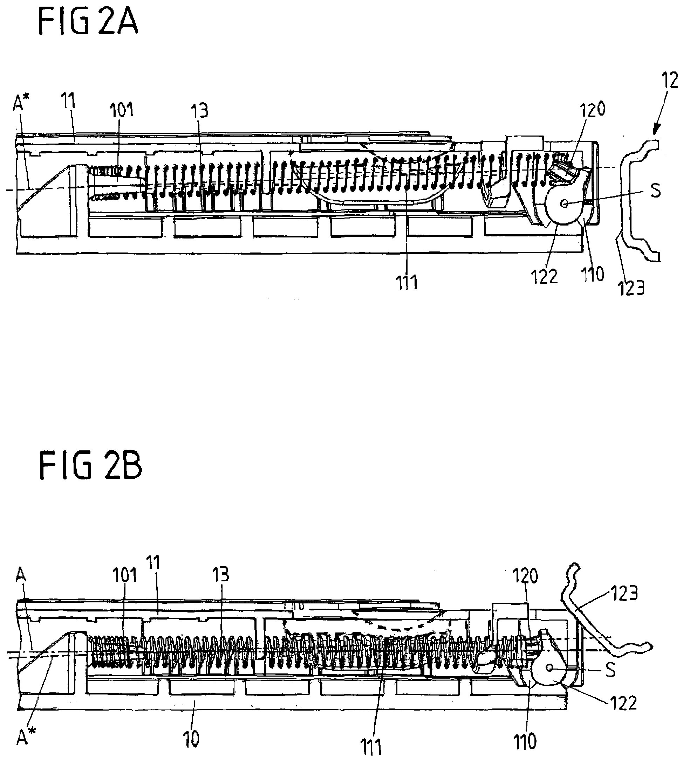

Die Sitztiefenverstellvorrichtung 1 umfasst ferner ein Betätigungselement 12, das manuell durch einen Sitzbenutzer betätigbar ist, um das Verstellteil 11 relativ zur Basis 10 entlang der Längsachse X zu verschieben. Das Betätigungselement 12 umfasst einen Griff 123 und einen Drehkörper 122. Das Betätigungselement 12 ist am Verstellteil 11 gelagert. Hierzu ist der Drehkörper 122 schwenkbar um eine in Fig. 2A und 2B eingezeichnete Schwenkachse S an Lagerstellen 110 des Verstellteils 11 aufgenommen, im gezeigten Beispiel an beiden Enden des länglichen Drehkörpers 122.

Der Griff 123 ist mit dem Drehkörper 122 fest verbunden, vorliegend über Stege, sodass das Betätigungselement 11 durch eine Betätigung des Griffs 123 in den Lagerstellen 110 drehbar ist. Vorliegend ist das Betätigungselement 12 einstückig ausgebildet.

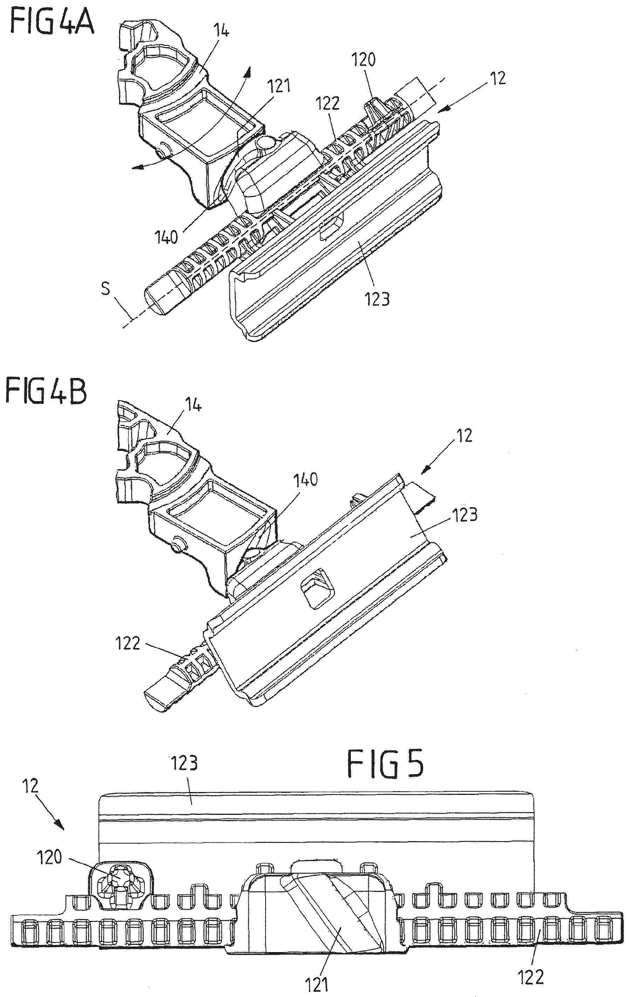

Das Betätigungselement 12 ist zwischen einer insbesondere in Fig. 1 und Fig. 2A gezeigten Verriegelungsstellung und einer insbesondere in Fig. 2B gezeigten Entriegelungsstellung durch eine Rotation um die Schwenkachse S verschwenkbar. Die Verriegelung und Entriegelung der Sitztiefenverstellvorrichtung 1 wird weiter unten im Zusammenhang mit den Fig. 4A bis 7 noch näher erläutert werden.

Die Sitztiefenverstellvorrichtung 1 umfasst ferner eine Feder 13, und zwar im gezeigten Beispiel nur genau eine Feder 13 (und keine weiteren Federn, insbesondere keine weiteren Federn zum Verriegeln und/oder Verstellen des Verstellteils bezüglich der Basis 10). Diese Feder 13 weist eine Doppelfunktion auf und dient sowohl dazu, das Betätigungselement 12 in die Verriegelungsstellung vorzuspannen, als auch dazu, das Verstellteil 11 bezüglich der Basis 10 in die ausgefahrene Stellung vorzuspannen. Die Feder 13 ist in einem Innenraum angeordnet, der durch die Basis 10 und das Verstellteil 11 ausgebildet wird.

Fig. 2A und 2B zeigen das Verstellteil 11 jeweils im eingefahrenen Zustand, in dem die Sitztiefenverstellvorrichtung 1 die geringste Sitztiefe bereitstellt. Fig. 2A zeigt ferner das Betätigungselement 12 in der Verriegelungsstellung. Um das Betätigungselement 12 in die Verriegelungsstellung zu drängen, übt die Feder 13 eine Federkraft auf das Betätigungselement 12 aus. Hierzu stützt sich die Feder 13 mit einem Ende an der Basis 10 ab und mit dem anderen Ende am Betätigungselement 12. Die Basis 10 umfasst hierzu eine Abstützstelle 101, im gezeigten Beispiel mit einem auf die Abstützstelle 120 des Betätigungselements 12 ausgerichteten Zapfen. Auch das Betätigungselement 12 umfasst eine Abstützstelle 120, und auch die Abstützstelle 120 des Betätigungselements 12 weist im gezeigten Beispiel einen Zapfen auf. Der Zapfen des Betätigungselements 12 ist kürzer als der Zapfen der Basis 10. In der Entriegelungsstellung (siehe insbesondere Fig. 2B) ist der Zapfen der Abstützstelle 120 des Betätigungselements 12 auf die Abstützstelle 101 der Basis 10 hin ausgerichtet. In der Verriegelungsstellung (siehe insbesondere Fig. 2A) ist der Zapfen der Abstützstelle 120 des Betätigungselements 12 hingegen nicht auf die Abstützstelle 101 der Basis 10 hin ausgerichtet (sondern zeigt vorliegend schräg nach oben von der Basis 10 weg).

Die Abstützstelle 120 des Betätigungselements 12 ist exzentrisch zur Schwenkachse S angeordnet. Ein Druck auf die Abstützstelle 120 drängt das Betätigungselement 12 hierdurch in eine Schwenkbewegung um die Schwenkachse S bis zum Erreichen eines Abschlags in der Verriegelungsstellung. Wird das Betätigungselement 12 also in der Entriegelungsstellung losgelassen, dann bewirkt die Feder 13 eine Rotation des Betätigungselements 12 um die Schwenkachse S, bis das Betätigungselement 12 die Verriegelungsstellung erreicht. Die Schwenkachse S ist senkrecht zur Längsachse X ausgerichtet.

Die Feder 13 ist eine Spiralfeder und längserstreckt. Die Feder weist somit eine Spiralachse A auf, um die sich die Feder 13 windet. In der Entriegelungsstellung des Betätigungselements 12 ist die Spiralachse A Feder 13 im Wesentlichen parallel zur Längsachse X ausgerichtet, in Fig. 2B durch eine strichpunktierte Linie veranschaulicht. Drängt die Feder 13 das Betätigungselement 12 zurück in die Verriegelungsstellung, dann schwenkt auch die Abstützstelle 120 des Betätigungselements 12 von der Abstützstelle 101 der Basis 10 weg. Hierdurch wird das am Betätigungselement 12 abgestützte Ende der Feder 12 in einer Richtung von der Basis 10 weg angehoben. Dadurch wird die Ausrichtung der Feder 13 oder zumindest eines Abschnitts der Feder 13 gegenüber der Ausrichtung in der Entriegelungsstellung verändert. Konkret wird die Spiralachse in der Verriegelungsstellung, in Fig. 2A und 2B als Spiralachse A* eingezeichnet, gegenüber der Ausrichtung der Spiralachse A in der Entriegelungsstellung um einen Winkel, vorliegend (etwa) 2°, geneigt.

Optional bildet das Verstellteil 11 eine Umlenkkontur 111 aus, an der die Feder 13 in der Verriegelungsstellung des Betätigungselements 12 anliegt. In Fig. 2A und 2B ist diese Umlenkkontur 111 durch gestrichelte Linien veranschaulicht. Durch diese Umlenkkontur 111 wird ein Abschnitt der Feder 13 von der Spiralachse A weggebogen. Hierdurch kann erreicht werden, dass der hintere Teil der Feder 13 stets dieselbe Ausrichtung aufweist, sodass kein Bauraum für eine Verlagerung dieses Abschnitts bereitgestellt werden braucht. Die Feder 13 weist somit zwei Funktionsbereiche auf, wobei der hintere Abschnitt der Feder 13 vorrangig dazu dient, das entriegelte Verstellteil 11 auszufahren, und ein vorderer Abschnitt dazu, das Betätigungselement 12 in die Verriegelungsstellung zu drängen.

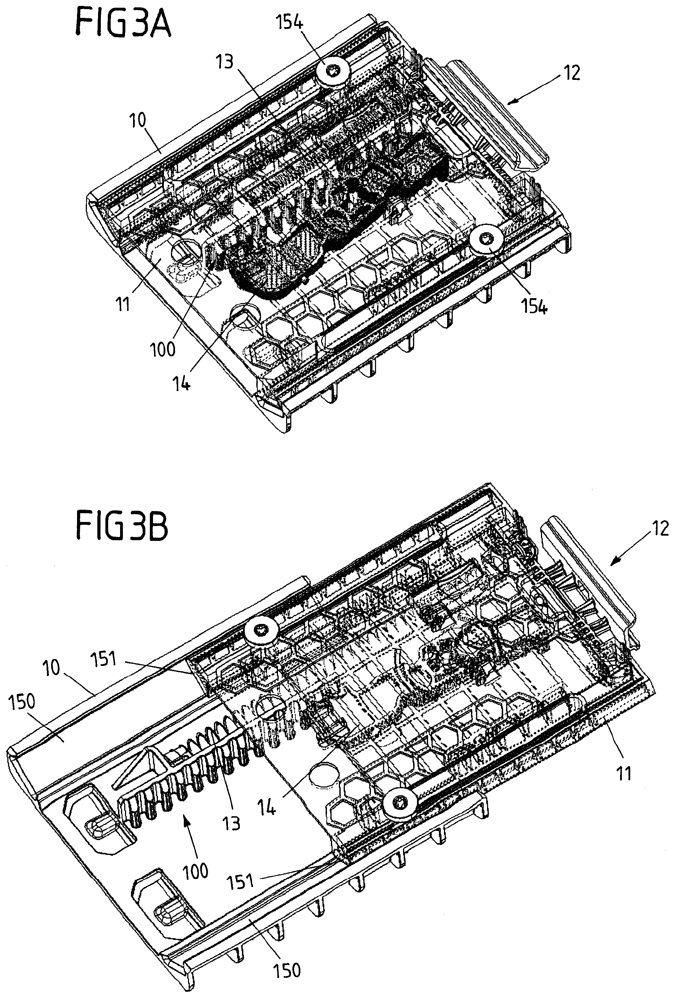

Die Feder 13 ist komprimiert eingebaut und drängt die Basis 10 und das Betätigungselement 12 voneinander weg. Wird das Betätigungselement 12 also in die Entriegelungsstellung überführt, siehe z.B. Fig. 3A, dann drängt die Feder 13 das Verstellteil 11 von der in Fig. 3A gezeigten eingefahrenen Stellung in eine in Fig. 3B gezeigte ausgefahrene Stellung (mit gegenüber der eingefahrenen Stellung vergrößerter Sitztiefe). Diese Bewegung kann auch manuell unterstützt werden. Wird das Betätigungselement 12 dann losgelassen, drängt die Feder 13 es in der oben beschriebenen Weise zurück in die Verriegelungsstellung. Dabei wirkt das Betätigungselement 12 mit einem Verriegelungselement 14 zusammen, welches in der Verriegelungsstellung verriegelnd mit einer an der Basis 10 ausgeformten Verriegelungskontur 100 im Eingriff steht und in der Entriegelungsstellung außer Eingriff mit der Verriegelungskontur 100 steht.

Diese Funktionsweise soll nun anhand der Fig. 4A bis 7 näher erläutert werden.

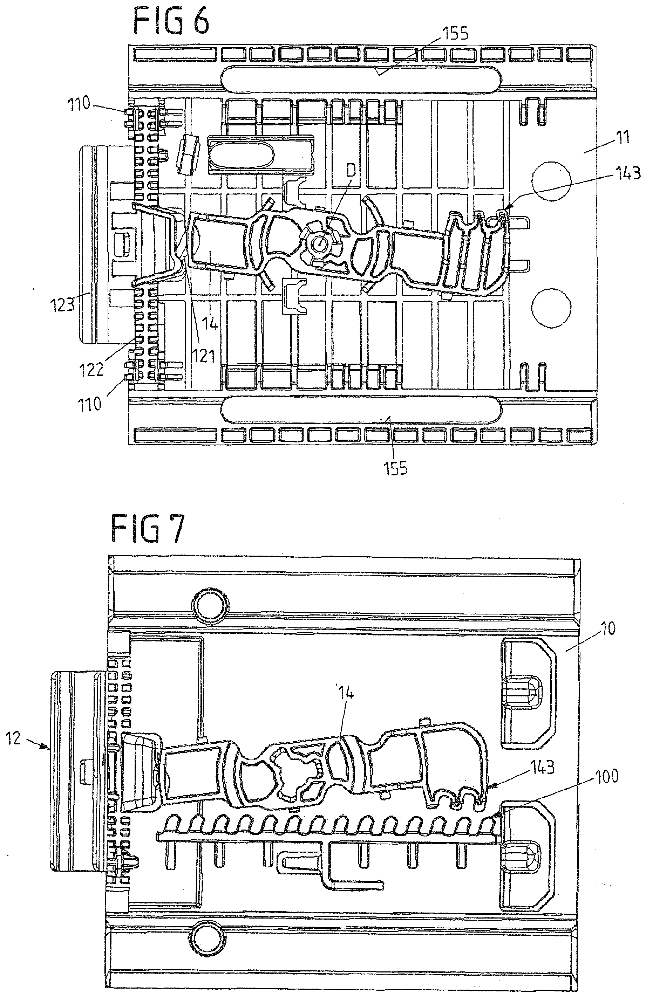

Das Verriegelungselement 14 ist um eine Drehachse D drehbar am Verstellteil 11 gelagert. Hierzu weist das Verstellteil 11 eine Lagerstelle (in Form eines Lagerzapfens) auf, auf welche eine Lageröffnung im Verriegelungselement 14 aufgesteckt ist. Vorliegend weist die Lagerstelle eine Kontur mit drei Armen auf, auf die die passend dazu ausgebildete Lageröffnung in einfacher Weise aufgesteckt werden kann, und die das Verriegelungselement 14 in einem Winkelbereich relativ zum Verstellteil 11 drehbar formschlüssig festhält. Wie insbesondere anhand von Fig. 7 zu erkennen, weist das Verriegelungselement 14 Zähne 143 auf, mit denen es in die als Zahnstange ausgebildete Verriegelungskontur 100 der Basis 10 eingreifen kann, um an verschiedenen, wählbaren Positionen entlang der Längsachse X damit zu verriegeln.

Um das Verriegelungselement 14 relativ zum Verstellteil 11 zu rotieren, umfasst das Betätigungselement 12 eine Gleitfläche 121, welche insbesondere in Fig. 5 zu erkennen ist. Die Gleitfläche 121 verläuft schräg zur Schwenkachse S und ist exzentrisch zur Schwenkachse S angeordnet. Im gezeigten Beispiel verläuft die Gleitfläche 121 gemäß einem Abschnitt einer Helix. Die Spiralachse der Helix ist z.B. parallel zur Schwenkachse S ausgerichtet. Die Gleitfläche 121 des Betätigungselements 12 ist an einem Block ausgeformt, der vom Drehkörper 122 des Betätigungselements 12 absteht (vorliegend etwa mittig in Bezug auf die Länge des Drehkörpers 122).

Die Gleitfläche 121 des Betätigungselements 12 steht im Eingriff mit einer passend ausgeformten Gleitfläche 140 des Verriegelungselements 14. Vorliegend wird die Gleitfläche 121 des Betätigungselements 12 durch einen Vorsprung ausgebildet, der in eine die Gleitfläche 140 des Verriegelungselements 14 ausbildende Vertiefung des Verriegelungselements 14 eingreift.

Wird das Betätigungselement 12 um die Schwenkachse S rotiert, dann gleiten die Gleitflächen 121, 140 aneinander entlang, wodurch infolge der Helixform das Verriegelungselement 14 um seine Drehachse D rotiert wird. Die Längsachse X, die Drehachse D und die Schwenkachse S sind untereinander jeweils senkrecht zueinander ausgerichtet. Das Verriegelungselement 14 weist zwei Arme auf, die jeweils von der Drehachse D ausgehen (vorliegend ist die Drehachse D zwischen den beiden Armen angeordnet). Am einen Arm ist die Gleitfläche 140 ausgebildet, am anderen Arm sind die Zähne 143 ausgebildet. Vorliegend ist das Verriegelungselement 14 einstückig ausgebildet.

Die bereits erwähnte Führungseinrichtung 15 der Sitztiefenverstellvorrichtung 1 umfasst zwei Paare von verschiebbar ineinandergreifenden Führungselementen 150, 151, jeweils eines an der Basis 10 und eines am Verstellteil 11. Jedes Paar von Führungselementen 150, 151 beschreibt eine Führungsachse. Die Führungsachse des einen Paars ist zur entsprechenden Führungsachse des anderen Paars beabstandet und parallel ausgerichtet. Die Führungsachsen spannen eine gemeinsame Ebene auf, die als Führungsebene bezeichnet werden kann. Auch die Längsachse X verläuft parallel zur Führungsebene (und parallel zu den Führungsachsen).

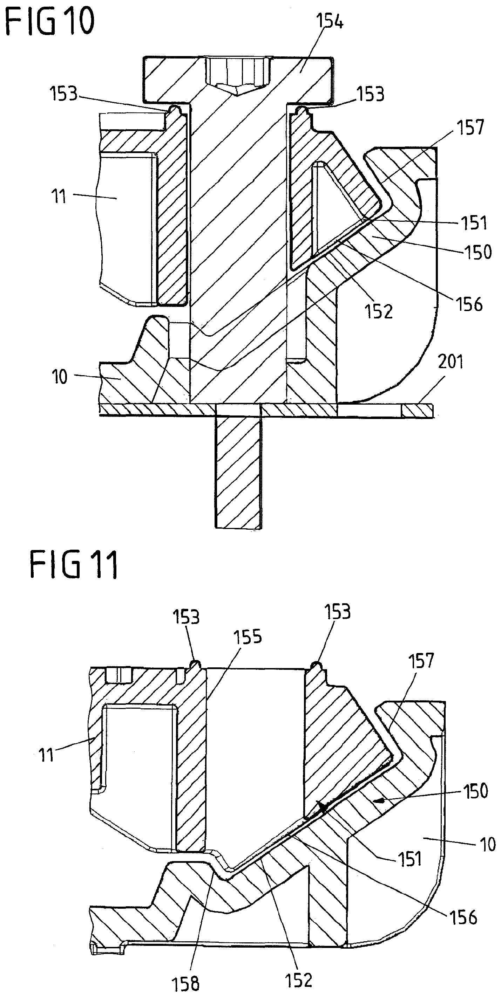

Die Führungselemente 150, 151 weisen dabei jeweils (zumindest) einen schräg zur Führungsebene verlaufenden Abschnitt 152, 156 auf, wie insbesondere anhand der Fig. 10 und 11 ersichtlich, welche Ausschnitte von Querschnittsansichten senkrecht zur Längsachse X an unterschiedlichen Positionen der Längsachse X zeigen. Konkret ist das dort gezeigte Führungselement 150 der Basis 10 in Form einer Tasche ausgebildet, die schräg zur Führungsebene ausgerichtet ist. Dabei stehen vom schräg zur Führungsebene verlaufenden Abschnitt 152 (der an sich eben ist) zwei Schenkel 157, 158 ab, und zwar vorliegend im Wesentlichen senkrecht zum schräg zur Führungsebene verlaufenden Abschnitt 152. Das Paar von Führungselementen 150, 151 an der gegenüberliegenden Seite der Sitztiefenverstellvorrichtung 1 ist spiegelbildlich ausgebildet. Die jeweiligen oberen Schenkel 157 verhindern ein Abheben des Verstellteils senkrecht zur Längsachse X formschlüssig.

Der schräge Abschnitt 152 und/oder der schräge Abschnitt 156 ist allgemein schräg zum Haltebolzen 154 und/oder schräg zu einer Ebene erstreckt, in der sich das Verstellteil 11 hauptsächlich erstreckt und/oder schräg zu einer horizontalen Ebene bei einer horizontalen Anordnung der Sitztiefenverstellvorrichtung 1.

Das jeweilige Führungselement 151 des Verstellteils 11 weist einen schräg zur Führungsebene verlaufenden Abschnitt 156 auf, der plan am jeweiligen schräg zur Führungsebene verlaufenden Abschnitt 152 der Basis 10 anliegt.

Jeweils ein Haltebolzen 154 pro Paar von Führungselementen 150, 151 durchgreift einen Schlitz 155 im Verstellteil 11. Die Länge der Schlitze 155 definiert die Länge des Verstellweges des Verstellteils 11 gegenüber der Basis 10. Die Haltebolzen 154 sind an der Basis 10 und/oder einer Sitzwanne 201, des Fahrzeugsitzes, an welcher die Basis 10 befestigt ist, befestigt, z.B. mittels einer nicht dargestellten Mutter. Ein Kopf des jeweiligen Haltebolzens 154 sichert das Verstellteil 11 an der Basis 11. Der Kopf gleitet am entsprechenden Schlitz 155 entlang. Um eine möglichst spielfreie Halterung zu ermöglichen, ist beiderseits des jeweiligen Schlitzes 155 ein streifenförmiger Vorsprung 153 ausgebildet. Die streifenförmigen Vorsprünge 153 erstecken sich längs entlang des jeweiligen Schlitzes 155. Die streifenförmigen Vorsprünge 153 erstecken sich vorliegend an einer Seite des Verstellteils 11, das der Basis 10 abgewandt ist.

Die streifenförmigen Vorsprünge 153 sind jeweils so dünn bemessen, dass sie durch den Kopf des Haltebolzens 154 (elastisch und/oder plastisch) verformbar sind. Hierdurch können Herstellungstoleranzen ausgeglichen werden. Bei der Herstellung wird der Haltebolzen 154 so tief eingesetzt, dass er die entsprechenden streifenförmigen Vorsprünge 153 elastisch und/oder plastisch verformt. Auch die schräg zur Führungsebene verlaufenden Abschnitte 152 156 erlauben einen Ausgleich von Herstellungstoleranzen, sodass die Sitztiefenverstellvorrichtung 1 besonders wackel- und klapperfrei herstellbar ist.

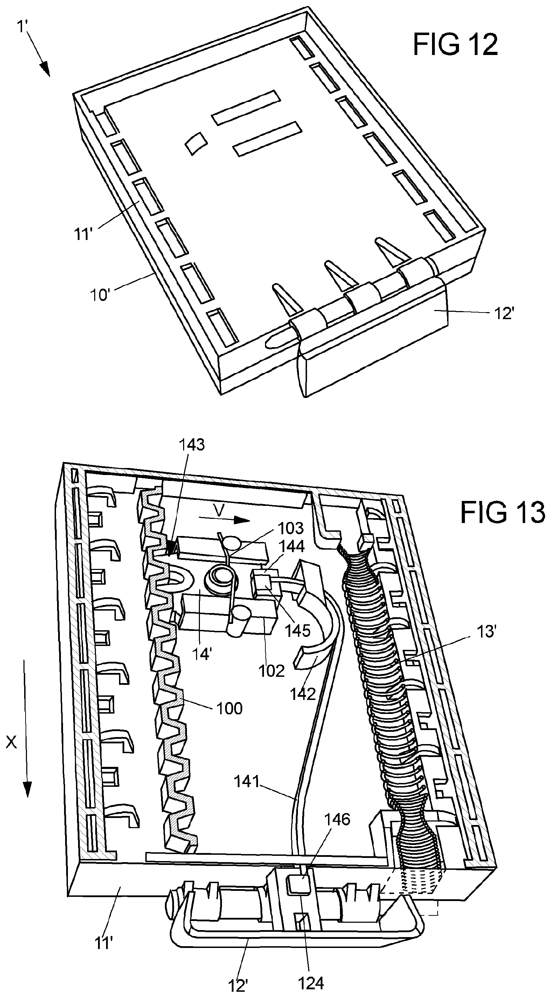

Fig. 12 und 13 zeigen eine Sitztiefenverstellvorrichtung 1' mit einer Basis 10', einem verschiebbar an der Basis 10' gelagerten Verstellteil 11' und einem am Verstellteil 11' gelagerten Betätigungselement 12', das zum Verschieben des Verstellteils 11' relativ zur Basis 10' betätigbar ist. Die Sitztiefenverstellvorrichtung 1' umfasst eine Feder 13', welche eine Bewegung des Verstellteils 11' in eine relativ zur Basis 10' ausgefahrene Stellung bewirkt oder unterstützt. Optional ist die Feder 13' entsprechend der Feder 13 der Sitztiefenverstellvorrichtung 1 gemäß Fig. 1 bis 11 ausgebildet und angeordnet (in Fig. 13 durch gestrichelte Linien veranschaulicht). Optional umfasst die Sitztiefenverstellvorrichtung 1' die oben beschriebene Führungseinrichtung 15.

Die Sitztiefenverstellvorrichtung 1' unterscheidet sich von der Sitztiefenverstellvorrichtung 1 gemäß Fig. 1 bis 11 durch die Ausgestaltung des Verriegelungselements 14' und die Kopplung des Verriegelungselements 14' mit dem Betätigungselement 12'.

Zur Kopplung des Verriegelungselements 14' mit dem Betätigungselement 12' umfasst die Sitztiefenverstellvorrichtung 1' gemäß Fig. 12 und 13 ein Kunststoffband 141. Das Kunststoffband 141 ist flexibel. Das Kunststoffband 141 weist die Form eines flachen Streifens mit zwei Enden auf. An jedem der beiden Enden ist ein Block 145, 146 ausgebildet. Das Kunststoffband 141 ist einstückig ausgebildet. Das Kunststoffband 141 besteht aus einem Polyamid, insbesondere Nylon (Polyhexamethylenadipinsäureamid), insbesondere Polyamid 6.6, kurz PA66. Derartige Materialien, insbesondere Polyamid 6.6, sind flexibel und weisen typischerweise eine hohe Tragkraft auf, beispielsweise von mehreren kg bereits bei wenigen mm^2 Querschnittsfläche. Weitere Vorteile von Polyamid 6.6 sind gute Gleiteigenschaften, eine hohe Reißfestigkeit, eine chemische Beständigkeit, insbesondere gegen Öl, und ein für den Fahrzeugbau geeigneter Einsatztemperaturbereich. Weitere besonders geeignete Materialien sind andere der Polyamid 6.6-Gruppe, z.B. PA66HS (hitzestabil), PA66W (UV-witterungsstabil), PAHSW (hitzestabil und UV-witterungsstabil), PA66HIR (schlagzäh), PA66HIRHS (schlagzäh und hitzestabilisiert) und Polyamid 6.6 V0 (hohe Brandschutzanforderungen).

Das Kunststoffband 141 wird in einem Spritzgussverfahren hergestellt.

Das Betätigungselement 12' der Sitztiefenverstellvorrichtung 1' gemäß Fig. 12 und 13 weist eine Aufnahme 124 auf. In die Aufnahme 124 ist der eine Block 146 des Kunststoffbandes 141 eingesetzt, wobei der Streifen des Kunststoffbandes 141 durch einen Schlitz an der Aufnahme 146 geführt ist. Die Aufnahme 124 und damit der darin angeordnete Block 146 sind exzentrisch zur Schwenkachse des Betätigungselements 12' am Verstellteil 11' angeordnet.

Der andere Block 145 des Kunststoffbandes 141 ist in einer Aufnahme 144 des Verriegelungselements 14' aufgenommen (auch hier ist der Streifen des Kunststoffbandes 141 durch einen Schlitz an der Aufnahme 144 geführt).

Das Verriegelungselement 14' ist in einer Führung 102 der Basis 10 verschiebbar geführt, und zwar vorliegend entlang einer Verschiebeachse V senkrecht zur Längsachse X. Das Verriegelungselement 14' weist Zähne 143 auf und kann auch als Zahnstein bezeichnet werden. Das Verriegelungselement 14' ist zwischen einer Verriegelungsstellung, in der die Zähne 143 in die Verriegelungskontur 100 der Basis 10 verriegelnd eingreifen, und einer Entriegelungsstellung, in der die Zähne 143 aus der Verriegelungskontur 100 abgezogen sind, entlang der Verschiebeachse V verschiebbar. Eine vorgespannte Rückstellfeder 103 drängt das Verriegelungselement 14' in die Verriegelungsstellung.

Der Streifen des Kunststoffbandes 141 erstreckt sich aus der Aufnahme 144 am Verriegelungselement 14' heraus parallel zur Verschiebeachse V. Aus der Aufnahme 124 am Betätigungselement 12' heraus erstreckt sich der Streifen des Kunststoffbandes 141 parallel zur Längsachse X. Dazwischen beschreibt der Streifen eine Biegung. Das Kunststoffband 141 ist hierzu um eine Umlenkkontur 142 geführt.

Wird das Betätigungselement 12' betätigt, also aus der Verriegelungsstellung heraus verschwenkt, dann wird infolge dieser Schwenkbewegung ein Zug auf das Kunststoffband 141 ausgeübt. Das Kunststoffband 141 wird dabei über die Umlenkkontur 142 gezogen und zieht das Verriegelungselement 14' aus dem verriegelnden Eingriff mit der Verriegelungskontur 100 der Basis. Die Feder 13' bewirkt dann eine Verstellung des Verstellteils 11 relativ zur Basis 10. Da das Kunststoffband einen flachen Streifen (mit einer Breite, die größer, insbesondere deutlich größer, ist als die Dicke), schneidet das Kunststoffband nicht in die Umlenkkontur 142 ein.

Das Kunststoffband 141 ist nicht in einer Hülle geführt. Anders als bei Bowdenzügen ist es daher nicht notwendig, eine Abstützung für eine Hülle bereitzustellen, was zusätzlichen Bauraum benötigen würde. Es ist anzumerken, dass ein derartiges Band, insbesondere Kunststoffband 141, auch für andere Verstell- und/oder Verriegelungsvorrichtung einsetzbar ist, bei denen eine Bewegung eines Teils (über das Band) an eine davon verschiedene Bewegung eines anderen Teils gekoppelt ist.

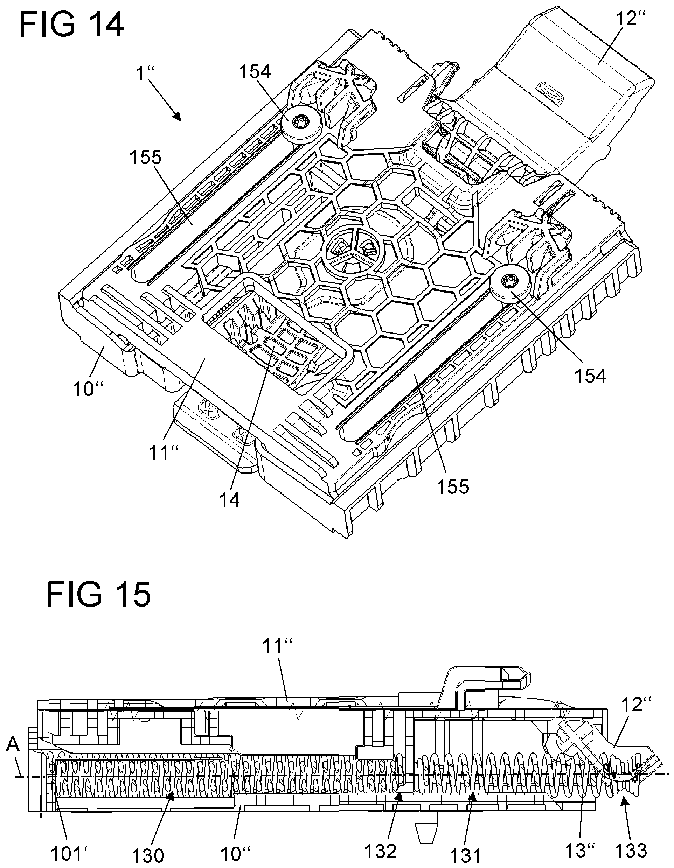

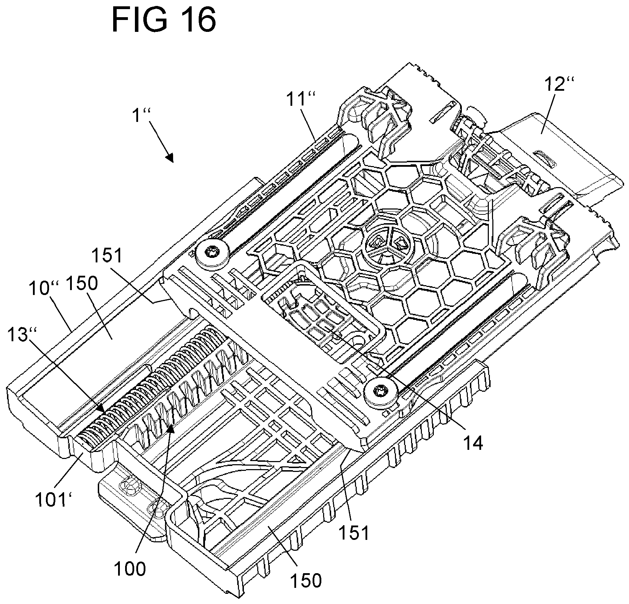

Fig. 14 bis 19 zeigen eine Verstellvorrichtung 1" mit einer Basis 10", einem verschiebbar an der Basis 10' gelagerten Verstellteil 11", einem am Verstellteil 11" gelagerten Betätigungselement 12", das zum Verschieben des Verstellteils 11" relativ zur Basis 10" betätigbar ist und einer Feder 13", welche sich an der Basis 10" und am Betätigungselement 12" abstützt. Die Verstellvorrichtung 1" gemäß Fig. 14 bis 19 ist ähnlich ausgebildet ist wie die Verstellvorrichtung 1 gemäß Fig. 1-11, sodass nachfolgend nur Unterschiede dazu erläutert werden und im Übrigen auf die obigen Ausführungen Bezug genommen wird.

Wie insbesondere anhand der Fig. 15 bis 18 zu erkennen, bilden sowohl die Basis 10" als auch das Verstellteil 11" jeweils für sich betrachtet ein Bett B als Aufnahme für die Feder 13" aus, in welches die Feder 13" jeweils eingebracht ist bzw. bei der Montage eingebracht wird. Das Bett B der Basis 10' und das Bett B des Verstellteils 11 "sind, jeweils für sich betrachtet, über die ganze Länge der Feder 13" in einer Richtung offen, und zwar in einer Richtung senkrecht zur Längs- und Spiralachse A der Feder 13", konkret in Richtung des jeweils anderen von der Basis 10" und dem Verstellteil 11".

Sowohl das Verstellteil 11" als auch die Basis 10"weisen jeweils einen Halteabschnitt 104, 112 auf. Der jeweilige Halteabschnitt 104, 112 bildet einen Teil des entsprechenden Bettes B aus. Jeder der Halteabschnitte 104, 112 ist in einer Richtung (so wie das jeweils zugehörige Bett B) offen. Damit sind die Halteabschnitte 104, 112 im zusammengebauten Zustand in entgegengesetzte Richtungen offen. An jedem der Halteabschnitte 104, 112 ist die Feder 13" eingerastet und damit formschlüssig verbunden. Die Halteabschnitte 104, 112 sind der Länge nach hintereinander angeordnet.

Jeder der Halteabschnitte 104, 112 wird durch zwei an gegenüberliegenden Seiten der Feder 13" angeordnete Balken 105, 113 gebildet. Die Balken 105, 113 umgreifen die Feder 13" gemeinsam. Die Balken 105, 113 erstrecken sich längs parallel zur Spiralachse A der Feder 13" und sind im hier gezeigten Beispiel auch in diese Richtung längserstreckt.

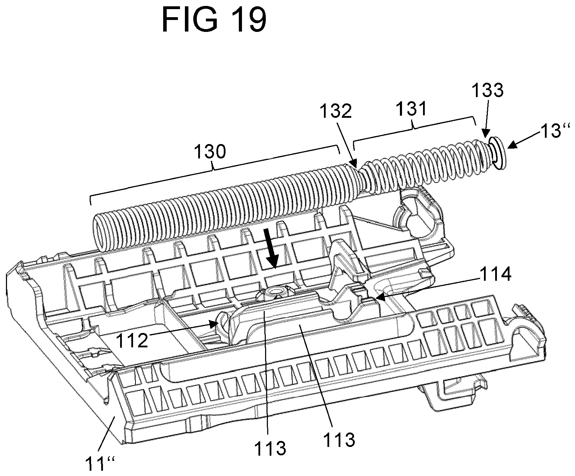

Die Feder 13" weist mehrere Abschnitte mit im eingefahrenen Zustand und auch im unbelasteten Zustand unterschiedlicher Steigung (der Spirale) auf (siehe insbesondere Fig. 15 und 19). Vorliegend umfasst die Feder 13" einen ersten Abschnitt 130 und einen im Vergleich dazu kürzeren zweiten Abschnitt 131. Der zweite Abschnitt 131 weist im unbelasteten Zustand eine größere Steigung auf als der erste Abschnitt 130. Zwischen dem ersten Abschnitt 130 und dem zweiten Abschnitt 131 ist die Feder 13" am Verstellteil 11" fixiert. Vorliegend umfasst die Feder 13" zwischen dem ersten Abschnitt 130 und dem zweiten Abschnitt 131 einen im Vergleich dazu enger gewundenen Abschnitt in Form einer Taillierung 132. Diese Taillierung 132 ist an einer Engstelle 114 des Verstellteils 11" gegen eine Verlagerung entlang der Spiralachse A arretiert. Die Feder stützt sich also an der Engstelle 114 in Richtung der Spiralachse A ab. Die Engstelle 114 ist gabelförmig aufgebaut und weist zwei Bereiche auf, zwischen die die Taillierung 132 der Feder 13" eingesteckt und/oder eingerastet ist. Die Engstelle 114 ist in dieselbe Richtung offen wie der daneben angeordnete Halteabschnitt 112 des Verstellteils 11".

Der erste Abschnitt 130 der Feder 13" stützt sich mit einem offenen Ende an einer Abstützstelle 101' der Basis 10" ab. Diese Abstützstelle 101' ist vorliegend durch eine zur Spiralachse A senkrechte Fläche ausgebildet. Der zweite Abschnitt 131 stützt sich am anderen offenen Ende der Feder 13" mittels einer Endtaillierung 133 am Betätigungselement 12" ab, und zwar dort an einer entsprechenden Abstützstelle 120'. An der Taillierung 132 stützt sich die Feder 13" wiederum am Verstellteil 11" ab. Der erste Abschnitt 130 ist im eingefahrenen Zustand vorgespannt und drückt mit der Taillierung 132 gegen die Engstelle 114. Dadurch bewirkt der erste Abschnitt 130 ein Ausfahren des Verstellteils 11" relativ zur Basis 10", wenn das Verriegelungselement 14 entriegelt wird. Der zweite Abschnitt 131 ist demgegenüber auf Zug vorgespannt und zieht damit das Betätigungselement 12" in die das Verriegelungselement 14 mit der Verriegelungskontur 100 verriegelnde Stellung. Beide Funktionen sind somit mit nur einer Feder realisierbar, zudem bei besonders geringem Platzbedarf für die Feder 13" und einer darüber hinaus auch besonders einfachen Montage.

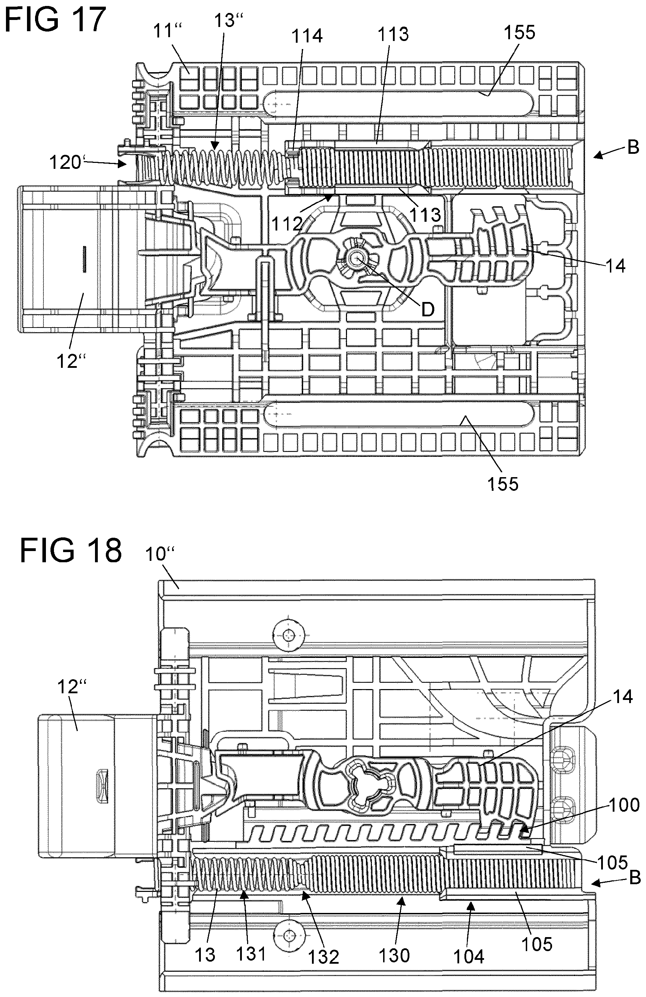

Bei der Montage wird das Betätigungselement 12", das zum Verschieben des Verstellteils 11" relativ zur Basis 10" betätigbar ist, schwenkbar am Verstellteil 11" montiert. Die entlang der Spiralachse A längserstreckte (Spiral-)Feder 13" wird am Halteabschnitt 104 der Basis 10" und am Halteabschnitt 112 des Verstellteils 11" montiert (siehe insbesondere Fig. 19), indem die Feder 13" senkrecht zur Spiralachse A in den einen und den anderen Halteabschnitt 104, 112 eingerastet wird. Die Feder kann dabei zuerst am Verstellteil 11" (siehe z.B. Fig. 17) und dann an der Basis 10" montiert werden oder erst an der Basis 10" (siehe z.B. Fig. 18) und dann am Verstellteil 11". Die Montage des Betätigungselements 12" kann vor oder nach der Montage der Feder 13" erfolgen. Ferner wird das Verstellteil 11" verschiebbar an der Basis 10" montiert.

Die Feder 13" ist nicht ausschließlich in Richtung der Spiralachse A in die Aufnahme (das Bett B) der Basis 10" und des Verstellteils 11" einlegbar, also nicht entlang der Spiralachse A in die Endposition einschiebbar. Es sei ferner angemerkt, dass die Feder 13" alternativ oder zusätzlich zur senkrechten Richtung schräg zur Spiralachse A in den einen und/oder den anderen Halteabschnitt 104, 112 einrastbar und/oder in das entsprechende Bett B einlegbar sein kann.

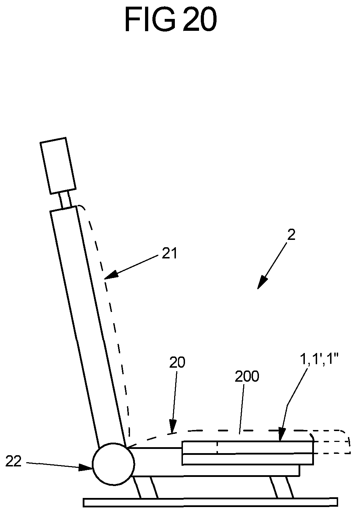

Ein in Fig. 20 schematisch dargestellter Fahrzeugsitz 2 weist ein Sitzteil 20 und ein über eine Anordnung von Beschlägen 22, insbesondere Rast- oder Getriebebeschlägen, schwenkbar zu dem Sitzteil 20 angeordnete Rückenlehne 21 auf. Auf dem Sitzteil 20 kann ein Sitzbenutzer Platz nehmen.

Ein solcher Fahrzeugsitz 2 kann als Vordersitz in einem Fahrzeug ausgebildet sein. Ein solcher Fahrzeugsitz 2 kann aber auch z.B. als Rücksitz, beispielsweise in zweiter Sitzreihe, in einem Fahrzeug verwendet werden.

Der Fahrzeugsitz 2 umfasst dabei die Sitztiefenverstellvorrichtung 1 gemäß Fig. 1 bis 11 oder die Sitztiefenverstellvorrichtung 1' gemäß Fig. 12 und 13 oder die Sitztiefenverstellvorrichtung 1" gemäß Fig. 14 bis 19. Eine ausgefahrene Stellung der Sitztiefenverstellvorrichtung 1; 1'; 1" ist durch kurz gestrichelte Linien veranschaulicht.

### Bezugszeichenliste

- 1; 1'; 1": (Sitztiefen-) Verstellvorrichtung
- 10; 10'; 10": Basis
- 100: Verriegelungskontur
- 101; 101': Abstützstelle
- 102: Führung
- 103: Rückstellfeder
- 104: Halteabschnitt
- 105: Balken
- 11; 11'; 11": Verstellteil
- 110: Lagerstelle
- 111: Umlenkkontur
- 112: Halteabschnitt
- 113: Balken
- 114: Engstelle
- 12; 12'; 12": Betätigungselement
- 120; 120': Abstützstelle
- 121: Gleitfläche
- 122: Drehkörper
- 123: Griff
- 124: Aufnahme
- 13; 13'; 13": Feder
- 130: erster Abschnitt
- 131: zweiter Abschnitt
- 132: Taillierung
- 133: Endtaillierung
- 14; 14': Verriegelungselement
- 140: Gleitfläche
- 141: (Kunststoff-) Band
- 142: Umlenkkontur
- 143: Zähne
- 144: Aufnahme
- 145, 146: Block
- 15: Führungseinrichtung
- 150: Führungselement
- 151: Führungselement
- 152: Abschnitt
- 153: Vorsprung
- 154: Haltebolzen
- 155: Schlitz
- 156: Abschnitt
- 157: Schenkel
- 158: Schenkel
- 2: Fahrzeugsitz
- 20: Sitzteil
- 200: Sitzpolster
- 201: Sitzwanne
- 21: Rückenlehne
- 22: Beschlag
- A: Spiralachse
- B: Bett
- D: Drehachse
- S: Schwenkachse
- V: Verschiebeachse
- X: Längsachse

## Patentansprüche

1. Verstellvorrichtung (1; 1'; 1") für einen Fahrzeugsitz (2), umfassend:
- eine Basis (10; 10'; 10"),
- ein verschiebbar an der Basis (10; 10'; 10") gelagertes Verstellteil (11, 11'; 11"),
- ein am Verstellteil (11; 11'; 11") gelagertes Betätigungselement (12; 12'; 12"), das zum Verschieben des Verstellteils (11; 11'; 11") relativ zur Basis (10; 10'; 10") betätigbar ist, und
- eine Feder (13; 13'; 13"), welche sich an der Basis (10; 10'; 10") und am Betätigungselement (12; 12'; 12") abstützt,
**dadurch gekennzeichnet, dass**
die Feder (13; 13'; 13") das Verstellteil (11; 11'; 11") in eine relativ zur Basis (10; 10'; 10") ausgefahrene Stellung vorspannt.

2. Verstellvorrichtung (1; 1'; 1") nach Anspruch 1, **dadurch gekennzeichnet, dass** die Verstellvorrichtung (1; 1'; 1") als Sitztiefenverstellvorrichtung ausgebildet ist und das Verstellteil (11; 11'; 11") dazu eingerichtet ist, zumindest einen Teil einer Sitzfläche des Fahrzeugsitzes (2) auszubilden und/oder zumindest ein Teil eines Sitzpolsters (200) zu tragen.

3. Verstellvorrichtung (1; 1'; 1") nach Anspruch 1 oder 2, **dadurch gekennzeichnet, dass** die Feder (13; 13'; 13") das Betätigungselement (12; 12'; 12") in eine das Verstellteil (11; 11'; 11") mit der Basis (10; 10'; 10") verriegelnde Verriegelungsstellung vorspannt.

4. Verstellvorrichtung (1; 1') nach einem der vorhergehenden Ansprüche, **dadurch gekennzeichnet, dass** die Feder (13; 13') als Spiralfeder mit einer Spiralachse (A) ausgebildet ist, wobei die Spiralachse (A) in Bezug auf die Basis (10; 10') und/oder das Verstellteil (11; 11') für zumindest einen Abschnitt der Feder (13; 13') einen anderen Winkel beschreibt, wenn das Betätigungselement (12; 12') in einer das Verstellteil (11; 11') mit der Basis (10; 10') verriegelnden Verriegelungsstellung angeordnet ist, als wenn das Betätigungselement (12; 12') in einer eine Verstellung des Verstellteils (11; 11') relativ zur Basis (10; 10') freigebenden Freigabestellung angeordnet ist.

5. Verstellvorrichtung (1; 1'; 1") nach einem der vorhergehenden Ansprüche, **dadurch gekennzeichnet, dass** das Betätigungselement (12; 12'; 12") um eine Schwenkachse (S) verschwenkbar am Verstellteil (11; 11'; 11") gelagert ist,
wobei sich die Feder (13; 13'; 13") an einer zur Schwenkachse (S) exzentrischen Abstützstelle (120; 120') des Betätigungselements (12; 12'; 12") abstützt.

6. Verstellvorrichtung (1; 1") nach einem der vorhergehenden Ansprüche, **gekennzeichnet durch** ein um eine Drehachse (D) drehbar an der Basis (10; 10") oder dem Verstellteil (11; 11") gelagertes Verriegelungselement (14), das lösbar mit einer Verriegelungskontur (100) in Eingriff bringbar ist, um die Basis (10; 10") mit dem Verstellteil (11; 11") zu verriegeln.

7. Verstellvorrichtung (1; 1") nach Anspruch 6, soweit rückbezogen auf Anspruch 5, **dadurch gekennzeichnet, dass** die Schwenkachse (S) und die Drehachse (D) in einem Winkel zueinander stehen, insbesondere im rechten Winkel.

8. Verstellvorrichtung (1; 1") nach Anspruch 6 oder 7, **dadurch gekennzeichnet, dass** das Betätigungselement (12; 12") mit dem Verriegelungselement (14) über aneinander entlang gleitende Gleitflächen (121, 140) wirkverbunden ist,
wobei zumindest eine der Gleitflächen (121, 140) die Form eines Abschnitts einer Helix beschreibt.

9. Verstellvorrichtung (1; 1") nach einem der vorhergehenden Ansprüche, **gekennzeichnet durch** eine Führungseinrichtung (15) zur Führung des Verstellteils (11; 11") an der Basis (10; 10"), umfassend zwei Paare von verschiebbar ineinandergreifenden Führungselementen (150, 151), die parallel zueinander ausgerichtet sind und eine Führungsebene aufspannen, wobei zumindest eines der Führungselemente (150, 151) einen schräg zur Führungsebene verlaufenden Abschnitt (152, 156) aufweist,
wobei an zumindest einem der Führungselemente (150, 151) ein streifenförmiger Vorsprung (153) ausgebildet ist,
wobei die Führungseinrichtung (15) einen Haltebolzen (154) umfasst, der dazu eingerichtet ist, am streifenförmigen Vorsprung (153) entlang zu gleiten.

10. Verstellvorrichtung (1')nach einem der Ansprüche 1 bis 5 oder 9, **gekennzeichnet durch** ein verschiebbar an der Basis (10') oder dem Verstellteil (11') gelagertes Verriegelungselement (14'), das lösbar mit einer Verriegelungskontur (100) in Eingriff bringbar ist, um die Basis (10') mit dem Verstellteil (11') zu verriegeln, wobei das Betätigungselement (12') mit dem Verriegelungselement (14') über ein flexibles Band (141), insbesondere ein Kunststoffband, wirkverbunden ist,
wobei das Band (141) gleitend an einer Umlenkkontur (142) geführt an der Umlenkkontur (142) anliegt.

11. Verstellvorrichtung (1") nach einem der vorhergehenden Ansprüche, **dadurch gekennzeichnet, dass** die Basis (10") eine Aufnahme (B) für die Feder (13") ausbildet, die über die gesamte Länge der längserstreckten Feder (13") in einer Richtung senkrecht zur längserstreckten Feder (13") geöffnet ist und/oder dass das Verstellteil (11") eine Aufnahme (B) für die Feder (13") ausbildet, die über die gesamte Länge der Feder (13") in einer Richtung senkrecht zur Feder (13") geöffnet ist.

12. Verstellvorrichtung (1") nach einem der vorhergehenden Ansprüche, **dadurch gekennzeichnet, dass** die Basis (10") und/oder das Verstellteil (11") einen Halteabschnitt (104, 112) aufweist, in welchem die Feder (13") formschlüssig gehalten ist und der in einer Richtung senkrecht zur längserstreckten Feder (13") geöffnet ist,
wobei der Halteabschnitt (104) der Basis (10") und der Halteabschnitt (112) des Verstellteils (11") in entgegengesetzte Richtungen geöffnet sind,
wobei der Halteabschnitt (104) der Basis (10") und der Halteabschnitt (112) des Verstellteils (11") entlang der Längsachse (A) der Feder (13") hintereinander angeordnet sind,
wobei der Halteabschnitt (104) der Basis (10") und/oder der Halteabschnitt (112) des Verstellteils (11") jeweils zwei zueinander parallele und voneinander beabstandete Balken (105, 113) aufweist.

13. Verstellvorrichtung (1") nach einem der vorhergehenden Ansprüche, **dadurch gekennzeichnet, dass** die Feder (13") zwei funktional verschiedene Abschnitte (130, 131) aufweist,
wobei die Feder (13") einen ersten Abschnitt (130), einen zweiten Abschnitt (131) und dazwischen eine Taillierung (132) aufweist, wobei die Taillierung in einer Engstelle (114) des Verstellteils (11") entlang einer vom ersten zum zweiten Abschnitt weisenden Achse arretiert ist,
wobei der erste Abschnitt (130) der Feder (13)" einen Druck auf die Engstelle (114) ausübt und der zweite Abschnitt (131) einen Zug auf die Engstelle (114) ausübt.

14. Fahrzeugsitz (2), **gekennzeichnet durch** eine Verstellvorrichtung (1; 1'; 1") nach einem der vorhergehenden Ansprüche.

15. Verfahren zur Herstellung einer Verstellvorrichtung (1") für einen Fahrzeugsitz (2), insbesondere gemäß einem der Ansprüche 1 bis 13, umfassend:
- Montieren einer entlang einer Längsachse (A) längserstreckten Feder (13") an einem Halteabschnitt (104) einer Basis (10") und/oder an einem Halteabschnitt (112) eines Verstellteils (11"), indem die Feder (13") in einer Richtung in einem Winkel zu ihrer Längsachse (A) in den Halteabschnitt (104, 112) eingerastet wird, und
- Montieren des Verstellteils (11") verschiebbar gelagert an der Basis (10") derart, dass ein Betätigungselement (12"), das zum Verschieben des Verstellteils (11") relativ zur Basis (10") betätigbar ist, am Verstellteil (11") gelagert ist.

## Claims

1. An adjustment device (1; 1'; 1") for a vehicle seat (2), comprising:
- a base (10; 10'; 10"),
- an adjusting part (11, 11', 11") shiftably mounted on the base (10; 10', 10"),
- an actuating element (12; 12'; 12") mounted on the adjusting part (11; 11'; 11"), which can be actuated for shifting the adjusting part (11; 11'; 11") relative to the base (10; 10'; 10"), and
- a spring (13; 13'; 13") which supports on the base (10; 10'; 10") and on the actuating element (12; 12'; 12"),
**characterized in that**
the spring (13; 13'; 13") pretensions the adjusting part (11; 11'; 11") into a position extended relative to the base (10; 10'; 10").

2. The adjustment device (1; 1'; 1") according to claim 1, **characterized in that** the adjusting device (1; 1'; 1") is formed as a seat depth adjusting device and the adjusting part (11; 11'; 11") is adapted to form at least part of a seating surface of the vehicle seat (2) and/or to carry at least part of a seat cushion (200).

3. The adjustment device (1; 1'; 1") according to claim 1 or 2, **characterized in that** the spring (13; 13'; 13") pretensions the actuating element (12; 12'; 12") into a locking position locking the adjusting part (11; 11'; 11") to the base (10; 10'; 10").

4. The adjustment device (1; 1') according to any of the preceding claims, **characterized in that** the spring (13; 13') is formed as a coil spring with a coil axis (A), wherein the coil axis (A) describes another angle with respect to the base (10; 10') and/or the adjusting part (11; 11') for at least one portion of the spring (13; 13') when the actuating element (12; 12') is arranged in a locking position locking the adjusting part (11; 11') to the base (10; 10'), than when the actuating element (12; 12') is arranged in a release position enabling an adjustment of the adjusting part (11; 11') relative to the base (10; 10').

5. The adjustment device (1; 1'; 1") according to any of the preceding claims, **characterized in that** the actuating element (12; 12'; 12") is pivotally mounted on the adjusting part (11; 11'; 11") about a pivot axis (S),
wherein the spring (13; 13'; 13") supports on a supporting point (120; 120') of the actuating element (12; 12'; 12") eccentric with respect to the pivot axis (S).

6. The adjustment device (1; 1") according to any of the preceding claims, **characterized by** a locking element (14) rotatably mounted on the base (10; 10") or the adjusting part (11; 11") about an axis of rotation (D), which can releasably be brought in engagement with a locking contour (100) in order to lock the base (10; 10") to the adjusting part (11; 11").

7. The adjustment device (1; 1") according to claim 6, as far as referring back to claim 5, **characterized in that** the pivot axis (S) and the axis of rotation (D) are disposed at an angle to each other, in particular at a right angle.

8. The adjustment device (1; 1") according to claim 6 or 7, **characterized in that** the actuating element (12; 12") is operatively connected to the locking element (14) via sliding surfaces (121, 140) sliding along each other,
wherein at least one of the sliding surfaces (121, 140) describes the shape of a portion of a helix.

9. The adjustment device (1; 1") according to any of the preceding claims, **characterized by** a guiding device (15) for guiding the adjusting part (11; 11") on the base (10; 10"), comprising two pairs of guide elements (150, 151) shiftably engaging in each other, which are aligned parallel to each other and define a guiding plane, wherein at least one of the guide elements (150, 151) includes a portion (152, 156) extending obliquely to the guiding plane,
wherein a strip-shaped protrusion (153) is formed on at least one of the guide elements (150, 151),
wherein the guiding device (15) comprises a retaining bolt (154) which is adapted to slide along the strip-shaped protrusion (153).

10. The adjustment device (1') according to any of claims 1 to 5 or 9, **characterized by** a locking element (14') shiftably mounted on the base (10') or the adjusting part (11'), which can releasably be brought in engagement with a locking contour (100) in order to lock the base (10') to the adjusting part (11'), wherein the actuating element (12') is operatively connected to the locking element (14') via a flexible tape (141), in particular a plastic tape,
wherein the tape (141) slidingly rests against a deflection contour (142), guided on the deflection contour (142).

11. The adjustment device (1") according to any of the preceding claims, **characterized in that** the base (10") forms a receptacle (B) for the spring (13") which is open in a direction perpendicular to the longitudinally extended spring (13") along the entire length of the longitudinally extended spring (13") and/or that the adjusting part (11") forms a receptacle (B) for the spring (13") which is open in a direction perpendicular to the spring (13") along the entire length of the spring (13").

12. The adjustment device (1") according to any of the preceding claims, **characterized in that** the base (10") and/or the adjusting part (11") includes a holding portion (104, 112) in which the spring (13") is positively held and which is open in a direction perpendicular to the longitudinally extended spring (13"),
wherein the holding portion (104) of the base (10") and the holding portion (112) of the adjusting part (11") are open in opposite directions,
wherein the holding portion (104) of the base (10") and the holding portion (112) of the adjusting part (11") are arranged one behind the other along the longitudinal axis (A) of the spring (13"),
wherein the holding portion (104) of the base (10") and/or the holding portion (112) of the adjusting part (11") each includes two bars (105, 113) parallel to each other and spaced apart from each other.

13. The adjustment device (1") according to any of the preceding claims, **characterized in that** the spring (13") includes two functionally different portions (130, 131),
wherein the spring (13") includes a first portion (130), a second portion (131) and a waisting (132) between them, wherein the waisting is arrested in a constriction (114) of the adjusting part (11") along an axis pointing from the first to the second portion, wherein the first portion (130) of the spring (13") exerts a pressure on the constriction (114), and the second portion (131) exerts a traction on the constriction (114).

14. A vehicle seat (2), **characterized by** an adjusting device (1; 1'; 1") according to any of the preceding claims.

15. A method for manufacturing an adjusting device (1") for a vehicle seat (2), in particular according to any of claims 1 to 13, comprising:
- mounting a spring (13") longitudinally extended along a longitudinal axis (A) on a holding portion (104) of a base (10") and/or on a holding portion (112) of an adjusting part (11") by snap-fitting the spring (13") into the holding portion (104, 112) in a direction at an angle to its longitudinal axis (A), and
- mounting the adjusting part (11") shiftably mounted on the base (10") in such a way that an actuating element (12"), which can be actuated for shifting the adjusting part (11") relative to the base (10"), is supported on the adjusting part (11").

## Revendications

1. Dispositif de réglage (1; 1'; 1") pour un siège de véhicule (2), comprenant :
- une base (10; 10'; 10"),
- une pièce de réglage (11, 11'; 11") montée de manière déplaçable sur la base (10; 10'; 10"),
- un élément d'actionnement (12; 12'; 12") monté sur la pièce de réglage (11; 11'; 11"), qui peut être actionné pour déplacer la pièce de réglage (11; 11'; 11") par rapport à la base (10; 10'; 10"), et
- un ressort (13; 13'; 13") qui s'appuie sur la base (10; 10'; 10") et sur l'élément d'actionnement (12; 12; 12"),
**caractérisé en ce que**
le ressort (13; 13'; 13") précontraint la pièce de réglage (11; 11'; 11") dans une position déployée par rapport à la base (10; 10'; 10").

2. Dispositif de réglage (1; 1'; 1") selon la revendication 1, **caractérisé en ce que** le dispositif de réglage (1; 1'; 1") est conçu comme un dispositif de réglage de profondeur d'assise et la pièce de réglage (11; 11'; 11") est conçue pour former au moins une partie d'une assise du siège de véhicule (2) et/ou pour porter au moins une partie d'un coussin de siège (200).

3. Dispositif de réglage (1; 1'; 1") selon la revendication 1 ou 2, **caractérisé en ce que** le ressort (13; 13'; 13") précontraint l'élément d'actionnement (12; 12'; 12") dans une position de verrouillage verrouillant la pièce de réglage (11; 11'; 11") avec la base (10; 10'; 10").

4. Dispositif de réglage (1; 1') selon l'une quelconque des revendications précédentes, **caractérisé en ce que** le ressort (13; 13') est conçu sous forme de ressort spiral avec un axe de spirale (A), l'axe de spirale (A) décrivant un angle différent par rapport à la base (10; 10') et/ou à la pièce de réglage (11; 11') pour au moins une section du ressort (13; 13') lorsque l'élément d'actionnement (12; 12') est agencé dans une position de verrouillage verrouillant la pièce de réglage (11; 11') avec la base (10; 10'), que lorsque l'élément d'actionnement (12; 12') est agencé dans une position de libération libérant un réglage de la pièce de réglage (11; 11') par rapport à la base (10; 10').

5. Dispositif de réglage (1; 1'; 1") selon l'une quelconque des revendications précédentes, **caractérisé en ce que** l'élément d'actionnement (12; 12'; 12") est monté sur la pièce de réglage (11; 11'; 11") de manière à pouvoir pivoter autour d'un axe de pivotement (S),
le ressort (13; 13'; 13") s'appuyant sur un point d'appui (120; 120') de l'élément d'actionnement (12; 12'; 12") excentré par rapport à l'axe de pivotement (S).

6. Dispositif de réglage (1; 1") selon l'une quelconque des revendications précédentes, **caractérisé par** un élément de verrouillage (14) monté sur la base (10; 10") ou la pièce de réglage (11; 11") de manière à pouvoir tourner autour d'un axe de rotation (D) et pouvant être mis en prise de manière amovible avec un contour de verrouillage (100) pour verrouiller la base (10; 10") avec la pièce de réglage (11; 11").

7. Dispositif de réglage (1; 1") selon la revendication 6, dans la mesure où il se rapporte à la revendication 5, **caractérisé en ce que** l'axe de pivotement (S) et l'axe de rotation (D) forment un angle l'un par rapport à l'autre, en particulier un angle droit.

8. Dispositif de réglage (1; 1") selon la revendication 6 ou 7, **caractérisé en ce que** l'élément d'actionnement (12; 12") est relié fonctionnellement à l'élément de verrouillage (14) par des surfaces de glissement (121, 140) glissant l'une le long de l'autre,
dans lequel au moins l'une des surfaces de glissement (121, 140) décrit la forme d'une section d'une hélice.

9. Dispositif de réglage (1; 1") selon l'une quelconque des revendications précédentes, **caractérisé par** un dispositif de guidage (15) pour guider la pièce de réglage (11; 11") sur la base (10; 10"), comprenant deux paires d'éléments de guidage (150, 151) s'engageant l'un dans l'autre de manière déplaçable, qui sont orientés parallèlement l'un à l'autre et qui définissent un plan de guidage, au moins l'un des éléments de guidage (150, 151) présentant une section (152, 156) s'étendant obliquement par rapport au plan de guidage,
dans lequel une saillie (153) en forme de bande est formée sur au moins l'un des éléments de guidage (150, 151),
dans lequel le dispositif de guidage (15) comprend un boulon de retenue (154) qui est adapté pour coulisser le long de la saillie en forme de bande (153).

10. Dispositif de réglage (1') selon l'une quelconque des revendications 1 à 5 ou 9, **caractérisé par** un élément de verrouillage (14') monté de manière déplaçable sur la base (10') ou la pièce de réglage (11') et pouvant être mis en prise de manière amovible avec un contour de verrouillage (100), pour verrouiller la base (10') avec la pièce de réglage (11'), l'élément d'actionnement (12') étant relié fonctionnellement à l'élément de verrouillage (14') par l'intermédiaire d'une bande flexible (141), en particulier une bande en matière plastique,
la bande (141) s'appuyant de manière coulissante sur un contour de renvoi (142) en étant guidée sur le contour de renvoi (142).

11. Dispositif de réglage (1") selon l'une quelconque des revendications précédentes, **caractérisé en ce que** la base (10") forme un logement (B) pour le ressort (13"), qui est ouvert sur toute la longueur du ressort (13") allongé dans une direction perpendiculaire au ressort allongé (13") et/ou **en ce que** la pièce de réglage (11") forme un logement (B) pour le ressort (13") qui est ouvert sur toute la longueur du ressort (13") dans une direction perpendiculaire au ressort (13").

12. Dispositif de réglage (1") selon l'une quelconque des revendications précédentes, **caractérisé en ce que** la base (10") et/ou la pièce de réglage (11") présente une section de retenue (104, 112) dans laquelle le ressort (13") est retenu par complémentarité de forme et qui est ouverte dans une direction perpendiculaire au ressort allongé (13"),
dans lequel la section de retenue (104) de la base (10") et la section de retenue (112) de la pièce de réglage (11") sont ouvertes dans des directions opposées,
dans lequel la section de retenue (104) de la base (10") et la section de retenue (112) de la pièce de réglage (11") sont agencées l'une derrière l'autre le long de l'axe longitudinal (A) du ressort (13"),
dans lequel la section de retenue (104) de la base (10") et/ou la section de retenue (112) de la pièce de réglage (11") présente respectivement deux barres (105, 113) parallèles entre elles et espacées l'une de l'autre.

13. Dispositif de réglage (1") selon l'une quelconque des revendications précédentes, **caractérisé en ce que** le ressort (13") présente deux sections (130, 131) fonctionnellement différentes,
dans lequel le ressort (13") comprend une première section (130), une deuxième section (131) et un rétrécissement (132) entre celles-ci, le rétrécissement étant bloqué dans un étranglement (114) de la pièce de réglage (11") le long d'un axe orienté de la première à la deuxième section,
dans lequel la première section (130) du ressort (13") exerce une pression sur le rétrécissement (114) et la deuxième section (131) exerce une traction sur le rétrécissement (114).

14. Siège de véhicule (2), **caractérisé par** un dispositif de réglage (1; 1'; 1") selon l'une quelconque des revendications précédentes.

15. Procédé de fabrication d'un dispositif de réglage (1") pour un siège de véhicule (2), en particulier selon l'une quelconque des revendications 1 à 13, comprenant :
- monter un ressort (13") allongé le long d'un axe longitudinal (A) sur une section de retenue (104) d'une base (10") et/ou sur une section de retenue (112) d'une pièce de réglage (11") en enclenchant le ressort (13") dans la section de retenue (104, 112) dans une direction formant un angle avec son axe longitudinal (A), et
- monter la pièce de réglage (11") logé de manière coulissante sur la base (10") de telle sorte qu'un élément d'actionnement (12"), qui peut être actionné pour déplacer la pièce de réglage (11") par rapport à la base (10"), est logé sur la pièce de réglage (11").
